# EUROPEAN PATENT APPLICATION

(11) **EP 4 379 840 A1**
(43) Date of publication of application: **05.06.2024**
(21) Application number: 23200441.6
(22) Date of filing: 28.09.2023
(51) Int. Cl.: H01M 4/13, H01M 4/133, H01M 4/62, H01M 50/414, H01M 50/429, H01M 50/434, H01M 50/451, H01M 4/134, H01M 4/131, H01M 10/0525, H01M 4/136

(54) **ORGANIC-INORGANIC COMPOSITE FILM AND LITHIUM BATTERY**

(30) Priority: 30.11.2022 TW 111145783
(71) Applicant: Industrial Technology Research Institute, Chutung, Hsinchu 310401 (TW)
(72) Inventor: LU, Ming-Yi, Hsinchu County (TW); CHEN, Yi-Chang, Taipei City (TW); YANG, Chang-Rung, Hsinchu City (TW); LEU, Chyi-Ming, Hsinchu County (TW); CHANG, Ju-Wen, New Taipei City (TW); LI, Ming-Xue, Hsinchu County (TW); WANG, Tsung-Hsiung, Taichung County (TW)
(74) Representative: Michalski Hüttermann & Partner Patentanwälte mbB

(57) **Abstract**

A lithium battery includes a positive electrode plate, a negative electrode plate, an electrolyte disposed between the positive electrode plate and the negative electrode plate, a separator disposed in the electrolyte, and an organic-inorganic composite film disposed on the surface of the positive electrode plate, the surface of the negative electrode plate, the surface of the separator, or a combination thereof. The organic-inorganic composite film includes 100 parts by weight of clay, 3 to 35 parts by weight of lignocellulose, and 25 to 270 parts by weight of a first binder.

## Description

### TECHNICAL FIELD

The technical field relates to a lithium battery, and in particular it relates to an organic-inorganic composite film in a lithium battery.

### BACKGROUND

The actual capacity per gram of the graphite serving as a negative electrode material is close to its theoretical value (372 mAh/g). To further enhance the capacity per gram, silicon particles, silicon oxide, lithium metal, and the like (with a high capacity per gram) can be introduced. The current mainstream technology involves the introduction of silicon negative electrode material such as silicon oxide, silicon particles, and the like. Compared to be only intercalated between the graphite layers, lithium may form an alloy with silicon. As such, introducing a silicon serving as negative electrode material has an obviously better capacitance per gram than conventional graphite. For example, the silicon oxide material and the silicon particles have a theoretical capacitance per gram of 1970 mAh/g and 4190 mAh/g, respectively. However, the alloying process may cause dramatic volume expansion, e.g. silicon oxide and silicon particles may expand about 120% and 300%, respectively. In addition, the first coulombic efficiency of silicon is lower than that of graphite. Volume expansion may result in structural cracks that may break the network of the conductive paths, thereby shortening the cycle lifespan and seriously affecting the battery's quality.

Accordingly, novel materials and structural designs for improving the reversible capacitance of the lithium battery (containing the silicon negative electrode) after several cycles is called for.

### SUMMARY

One embodiment of the disclosure provides an organic-inorganic composite film, including: 100 parts by weight of clay; 3 to 35 parts by weight of lignocellulose; and 25 to 270 parts by weight of a first binder.

One embodiment of the disclosure provides a lithium battery, including: a positive electrode plate; a negative electrode plate; an electrolyte disposed between the positive electrode plate and the negative electrode plate; a separator disposed in the electrolyte; and the described organic-inorganic composite film disposed on the surface of the positive electrode plate, the surface of the negative electrode plate, the surface of the separator, or a combination thereof.

A detailed description is given in the following embodiments.

### DETAILED DESCRIPTION

In the following detailed description, for purposes of explanation, numerous specific details are set forth in order to provide a thorough understanding of the disclosed embodiments. It will be apparent, however, that one or more embodiments may be practiced without these specific details.

One embodiment of the disclosure provides an organic-inorganic composite film, including: 100 parts by weight of clay; 3 to 35 parts by weight of lignocellulose; and 25 to 270 parts by weight of a first binder. In some embodiments, the lignocellulose can be original (e.g. not modified) lignocellulose or modified lignocellulose. The lignocellulose is mainly composed of cellulose, hemicellulose, and lignin. The lignocellulose contains a plurality of polar groups such as alcohols, aldehydes, ketones, acids, phenolics, esters, and tannins. As such, the lignocellulose may capture divalent metal ions. The organic-inorganic composite film may be used in energy storage element. When the organic-inorganic composite film is used in the lithium battery, it may prevent the divalent metal ions from being released from the positive electrode plate of the lithium battery, penetrating through the separator, and chemically reduced and deposited as crystal nucleus on the negative electrode plate. The crystal nucleus may easily cause the problem of lithium dendrites.

The layered structure of the clay may efficiently transport monovalent ions, such that the lithium ions may successfully pass through the clay, which will not affect the operation of the lithium battery. If the clay amount is too high, the clay cannot be evenly dispersed in the organic-inorganic composite to degrade the properties of the organic-inorganic composite film. If the clay amount is too low, it cannot efficiently inhibit the volume expansion and degradation of the negative electrode. In some embodiments, the natural clay includes montmorillonite clay, vermiculite clay, another clay having a high cationic conductivity, or a combination thereof. In some embodiments, the clay may have a diameter of 1 micrometer or less. For example, the diameter of the clay may be between 0.02 micrometers and 1 micrometer. If the clay's diameter is too large, it will be difficult to be evenly dispersed in the composite solution.

In some embodiments, the first binder may efficiently combine the lignocellulose and the clay to form a homogeneous mixture. If the first binder amount is too high, the lignocellulose and/or clay amount will be too low and cause the mentioned problems. If the first binder amount is too low, the lignocellulose and the clay in the organic-inorganic composite may be delaminated or peeled. The first binder may include polyacrylic acid, polyacrylonitrile, polyethylene carbonate, polyacrylamide, polyethylene glycol, polysiloxane, polyamide, polyvinylidene fluoride, vinylidene fluoride-hexafluoro propylene copolymer, polyvinylpyrrolidone, or a combination thereof.

In some embodiments, the modified lingo cellulose can be lignocellulose modified by a chelating agent. In some embodiments, the lignocellulose and the chelating agent have a weight ratio of 100:0.1 to 100:20. The lignocellulose modified by the chelating agent may further improve the organic-inorganic composite film effect of capturing the divalent metal ions to prevent the problem of lithium dendrites. If the chelating agent amount is too low, the effect will be similar to that of the lignocellulose not modified by the chelating agent. If the chelating agent amount is too high, it will interfere the electrical properties. In some embodiments, the chelating agent includes N,N-bis(5-pyridoxalphosphate)-ethylene diamine-N,N'-diacetic acid, N,N'-bis(3- hydroxy-2-methyl-5-phosphonylmethyl)-4-pyridylmethyl) ethylenediamine -N,N'-diacetic acid (DPDP), diethylenetriaminepentaacetic acid (DTPA), cyclohexanediaminetetraacetic acid (DCTA), N,N,N',N'-tetrakis(2-hydroxy propyl)ethylenediamine (EDTP), 1,4,7,10- tetraazacyclododecane-1,4,7,10-tetraacetic acid (DOTA), ethylenediamine tetraacetic acid (EDTA), 1-oxa-4,7,10-triazacyclododecanetriacetic acid (DOXA), 1,4,7,10-tetraaza cyclododecane-1,4,7-triacetic acid trisodium salt (DO3A), or a combination thereof.

In some embodiments, the organic-inorganic composite film may further include 0.1 to 15 parts by weight of oxide nanopowder. The oxide nanopowder may further increase the mechanical strength of the organic-inorganic composite film and support of the layered structure of the clay. If the oxide nanopowder amount is too low, the effect will be similar to that of the organic-inorganic composite film without the oxide nanopowder. If the oxide nanopowder amount is too high, the overly high amount of the oxide nanopowder will distribute outside the layered structure of the clay, and too much inorganic material will be easily peeled due to insufficient adhesion force. As a result, the battery loses the protective effect. In one embodiment, the oxide nanopowder includes aluminum oxide, silicon oxide, boehmite, titanium oxide, magnesium oxide, or a combination thereof, and the configuration of the oxide nanopowder can be particle, fiber, wire, or net. In some embodiments, the oxide nanopowder has a diameter of 1 nm to 200 nm. If the diameter of the oxide nanopowder is too large, the oxide nanopowder cannot be efficiently dispersed into the layered structure of the clay to support, and the composite solution is difficult to be evenly dispersed. As such, the lithium ion conductivity is affected, the possibility of forming the lithium dendrites is increased, and the effect of capturing the divalent ions is decreased. If the diameter of the oxide nanopowder is too small, the oxide nanopowder will aggregate due to it is difficult to disperse.

In some embodiments, the organic-inorganic composite film may have a thickness of 0.1 micrometers to 10 micrometers, depends on the application. When the organic-inorganic composite film is used in the lithium battery, if the organic-inorganic composite film is too thick, the ion conductivity will be lowered to increase the impedance, which results in electrical degradation such as lowering the battery capacity. If the organic-inorganic composite film is too thin, the active material will not be protected, the delamination will occur, and the chelating effect will be lowered.

One embodiment of the disclosure provides a lithium battery, including: a positive electrode plate; a negative electrode plate; an electrolyte disposed between the positive electrode plate and the negative electrode plate; a separator disposed in the electrolyte; and the organic-inorganic composite film disposed on the surface of the positive electrode plate, the surface of the negative electrode plate, the surface of the separator, or a combination thereof. For example, the organic-inorganic composite film can be (1) only formed on (directly contact or not) the surface of the negative electrode plate and disposed between the negative electrode plate and the separator; (2) only formed on (directly contact or not) the surface of the positive electrode plate and disposed between the positive electrode plate and the separator; (3) only formed on (directly contact or not) one surface of the separator and disposed between the separator and the negative electrode plate; (4) only formed on (directly contact or not) one surface of the separator and disposed between the separator and the positive electrode plate; or (5) a combination thereof (e.g. formed on (directly contact or not) the surface of the negative electrode plate, the surface of the positive electrode plate, and the two surfaces of the separator). No matter where the organic-inorganic composite film is located, it may improve the performance of the lithium battery. In practice, the electrolyte may corrode the positive electrode plate and make the divalent metal ions such as manganese ions, cobalt ions, or nickel ions be dissociated. If the lithium battery is free of the organic-inorganic composite film, the divalent metal ions may penetrate through the separator to be deposited on the negative electrode plate, such that the lithium dendrites are easily formed thereon to degrade the performance of lithium batteries. In some embodiments, the negative electrode plate can be silicon negative electrode plate. When the organic-inorganic composite film is formed on the silicon negative electrode plate, it helps to suppress the volume expansion of the silicon negative electrode plate during charge/discharge cycles, to mitigate the battery degradation, and to elongating the cycle lifespan of the battery. In some embodiments, the negative electrode plate can be graphite negative electrode plate.

In some embodiments, the positive electrode plate includes a lithium metal composite oxide, a first conductive additive, and a second binder, wherein the lithium metal composite oxide includes LiMnO₂, LiMn₂O₄, LiCoO₂, Li₂Cr₂O₇, Li₂CrO₄, LiNiO₂, LiFeO₂, LiNiₓCo₁₋ₓO2 (0<x<1), LiMPO₄ (M is transition metal), LiMn_{0.5}Ni_{0.5}O₂, LiNiₓCo_{y}Mn_{z}O₂ (x+y+z=1), LiNiₓCo_{y}Al_{z}O₂ (x+y+z=1), LiMc_{0.5}Mn_{1.5}O₄ (Mc is divalent metal), or a combination thereof; wherein the first conductive additive includes carbon black, graphite, graphene, carbon nanotube, acetylene black, nickel powder, aluminum powder, titanium powder, stainless steel powder, or a combination thereof; and wherein the second binder includes polyvinylidene fluoride, styrene butadiene rubber, polyamide, melamine resin, or a combination thereof.

For example, the positive electrode plate can be prepared as follows: 65 to 75 parts by weight of lithium metal composite oxide such as lithium nickel cobalt manganese metal oxide, 25 to 35 parts by weight of solvent such as N-methylpyrrolidone (NMP), 2 to 5 parts by weight of conductive carbon black, and 0.1 to 1 parts by weight of carbon nanotube serving as conductive additive are stirred and mixed for several hours. NMP solution (containing 1 to 5 parts by weight of PVDF)) of PVDF is then added to the mixture and continuously stirred and mixed for several hours to obtain a positive electrode slurry. The positive electrode slurry is coated onto a current collector (e.g. aluminum foil) and then heated to 150°C for being dried and then rolled, thereby forming a positive electrode active layer having a thickness of 51 micrometers to 65 micrometers on the current collector. As such, a positive electrode plate is completed. It should be understood that the above process steps are only for illustration, and one skilled in the art may adjust the material compositions and preparation method for the positive electrode plate if necessary, which are not limited to the above description.

In some embodiments, the separator includes polyethylene (PE), polypropylene (PP), or a multi-layered structure thereof (e.g. PE/PP/PE).

In some embodiments, the silicon negative electrode plate includes silicon negative electrode active material, a second conductive additive, and a third binder. The silicon negative electrode active material includes silicon oxide, a mixture of silicon and graphite, or a combination thereof. The second conductive additive includes carbon black, graphite, graphene, carbon nanotube, acetylene black, nickel powder, aluminum powder, titanium powder, stainless steel powder, or a combination thereof. The third binder includes polyvinylidene fluoride, styrene butadiene rubber, polyamide, melamine resin, or a combination thereof.

For example, the silicon negative electrode plate can be prepared as follows: 40 to 55 parts by weight of silicon oxide/graphite negative electrode active material SiOC, 50 to 60 parts by weight of de-ionized water, 0.1 to 1 part by weight of conductive carbon black (e.g. Super-P or KS6) or carbon nanotube serving as conductive additive, 0.2 to 2 parts by weight of styrene butadiene rubber serving as binder, and 0.2 to 2 parts by weight of sodium carboxymethyl cellulose (CMC) serving as thickening agent are stirred and mixed for several hours to obtain a silicon negative electrode slurry. The silicon negative electrode slurry is coated onto a current collector (e.g. copper foil) and then heated to 50°C to 90°C for being dried and then rolled, thereby forming a silicon negative electrode active layer having a thickness of 55 micrometers to 56 micrometers on the current collector. As such, a silicon negative electrode plate is completed. It should be understood that the above process steps are only for illustration, and one skilled in the art may adjust the material compositions and preparation method for the silicon negative electrode plate if necessary, which are not limited to the above description.

In some embodiments, the graphite negative electrode plate includes graphite negative electrode active material, a second conductive additive, and a third binder. The graphite negative electrode active material includes artificial graphite, natural graphite, modified graphite, graphitized mesocarbon microbead (MCMB), or a combination thereof. The second conductive additive comprises carbon black, graphene, carbon nanotube, acetylene black, nickel powder, aluminum powder, titanium powder, stainless steel powder, or a combination thereof. The third binder includes polyvinylidene fluoride, styrene butadiene rubber, polyamide, melamine resin, or a combination thereof.

The electrolyte can be liquid-type, gel-type, or quasi-solid-type. Taking liquid type of electrolyte solution as an example, its major components are organic solvent, lithium salt, and the other applicable additives. The organic solvent can be γ-butyrolactone (GBL), ethylene carbonate (EC), propylene carbonate (PC), diethyl carbonate (DEC), propyl acetate (PA), dimethyl carbonate (DMC), ethylmethyl carbonate (EMC), or a combination thereof. The lithium salt can be LiPF₆, LiBF₄, LiAsF₆, LiSbF₆, LiClO₄, LiAlCl₄, LiGaCl₄, LiNOs, LiC(SO₂CF₃)₃, LiN(SO₂CF₃)₂, LiSCN, LiO₃SCF₂CF₃, LiC₆F₅SO₃, LiO₂CCF₃, LiSO₃F, LiB(C₆H₅)₄, LiCF₃SO₃, LiB(C₂O₄)₂, or a combination thereof.

Below, exemplary embodiments will be described in detail so as to be easily realized by a person having ordinary knowledge in the art. The inventive concept may be embodied in various forms without being limited to the exemplary embodiments set forth herein.

### Examples

In following Examples, the positive electrode plate was prepared as follows: 67.6 parts by weight of lithium nickel cobalt manganese metal oxide (LNMC, S85E commercially available from Ronbay) serving as lithium metal composite oxide, 30 parts by weight of N-methylpyrrolidone (NMP), 1 part by weight of conductive carbon black Super-P (commercially available from TAIWAN MAXWAVE CO., LTD.), and 0.25 parts by weight of single-wall carbon nanotube (SWCNT commercially available from Tuball) serving as conductive additive were stirred and mixed for several hours. NMP solution (containing 1.5 parts by weight of PVDF)) of PVDF (Solef^{®}5130 commercially available from Solvay) was then added to the mixture and continuously stirred and mixed for several hours to obtain a positive electrode slurry. The positive electrode slurry was coated onto an aluminum foil and then heated to 150°C for being dried and then rolled, thereby forming a positive electrode active layer having a thickness of 60 micrometers on the aluminum foil. As such, a positive electrode plate was completed.

In following Examples, the silicon negative electrode plate was prepared as follows: 41.6 parts by weight of silicon oxide/graphite negative electrode active material SiOC 500 (S500A commercially available from BTR), 56.9 parts by weight of de-ionized water, 0.129 parts by weight of conductive carbon black Super-P (commercially available from TAIWAN MAXWAVE CO., LTD.), and 0.1 parts by weight of carbon nanotube (Water commercially available from Tuball) serving as conductive additive, 0.546 parts by weight of styrene butadiene rubber (SBR, 451B commercially available from Zeon) serving as binder, and 0.56 parts by weight of sodium carboxymethyl cellulose (CMC) serving as thickening agent were stirred and mixed for several hours to obtain a silicon negative electrode slurry. The silicon negative electrode slurry was coated onto an copper foil and then heated to 90°C for being dried and then rolled, thereby forming a silicon negative electrode active layer having a thickness of 55 micrometers on the copper foil. As such, a silicon negative electrode plate was completed.

In following Examples, the separator was a tri-layered separator 2320 (PP/PE/PP, commercially available from Celgard). The electrolyte containing FEC for NMC811/SiOC was commercially available from Shenzhen Capchem Technology Co., Ltd..

In following Examples, the lignocellulose was prepared as follows: bamboo fiber was ground and sintered at a high temperature of 600°C for 5 hours to be carbonized, and then ground again to form lignocellulose. The lignocellulose modified by a chelating agent was prepared as follows: 0.9 parts by weight of DTPA (commercially available from Mitsubishi Chemical, 99%) and 9 parts by weight of lignocellulose were mixed in 90.1 parts by weight of ethanol (99.9%) under nitrogen, and then put into an oven at 110°C for being completely dried, and then ground to obtain the lignocellulose modified by the chelating agent.

### Comparative Example 1

1.5 g of aluminum oxide (UR-IALU001 commercially available from UNI-ONWARD Co., having a diameter of about 13 nm) and 13.5 g of montmorillonite clay (commercially available from Southern Clay, having a diameter of less than 0.5 micrometers) serving as clay were dispersed in 185 g of acetone. 35 g of PVDF powder (Kynar HSV900 commercially available from ARKEM) was added into the dispersion and then stirred to be completely dispersed, thereby obtaining an organic-inorganic composite coating material.

The organic-inorganic composite coating material was coated onto the silicon negative electrode plate, and then dried to form an organic-inorganic composite film on the surface of the silicon negative electrode plate. The positive electrode plate and the silicon negative electrode plate (containing the organic-inorganic composite film on its surface) were each cut to appropriate size, and the separator was disposed between the positive electrode plate and the silicon negative electrode plate. The organic-inorganic composite film was disposed between the silicon negative electrode plate and the separator. The electrolyte was injected into the space between the positive electrode plate and the silicon negative electrode plate, and the separator was disposed in the electrolyte. The above structure was left to stand for 1 day, and the electrolyte diffused and soaked the positive electrode plate and the negative electrode plate. The above structure was then charged to 4.2 V by a current of 0.1 C, and then discharged to 2.5 V by a current of 0.1 C. The charge/discharge cycle was repeated three times to finish the formation process, thereby completing the lithium battery.

The battery had a discharge capacity of 183.8 mAh/g after one charge/discharge (0.1C/0.1C) cycle. The further cycle test was performed as follows: the battery was charged to 4.2 V by a current of 0.5 C, and then discharged to 2.5 V by a current of 0.5 C to complete one cycle. The battery had a discharge capacity of 149 mAh/g (defined as the reversible capacity of 100%) after one charge/discharge (0.5 C/0.5 C) cycle. The battery had a discharge capacity of 118 mAh/g (reversible capacity of 79.6%) after 100 charge/discharge (0.5 C/0.5 C) cycles. The battery had a discharge capacity of 91.5 mAh/g (reversible capacity of 61.3%) after 300 charge/discharge (0.5 C/0.5 C) cycles. The battery had a discharge capacity of 68.78 mAh/g (reversible capacity of 46%) after 500 charge/discharge (0.5 C/0.5 C) cycles.

### Example 1

1.5 g of lignocellulose and 13.5 g of montmorillonite clay (commercially available from Southern Clay, having a diameter of less than 0.5 micrometers) serving as clay were dispersed in 185 g of acetone. 35 g of PVDF powder (Kynar HSV900 commercially available from ARKEM) was added into the dispersion and then stirred to be completely dispersed, thereby obtaining an organic-inorganic composite coating material.

The organic-inorganic composite coating material was coated onto the silicon negative electrode plate, and then dried to form an organic-inorganic composite film on the surface of the silicon negative electrode plate. The positive electrode plate and the silicon negative electrode plate (containing the organic-inorganic composite film on its surface) were each cut to appropriate size, and the separator was disposed between the positive electrode plate and the silicon negative electrode plate. The organic-inorganic composite film was disposed between the silicon negative electrode plate and the separator. The electrolyte was injected into the space between the positive electrode plate and the silicon negative electrode plate, and the separator was disposed in the electrolyte. The above structure was left to stand for 1 day, and the electrolyte diffused and soaked the positive electrode plate and the negative electrode plate. The above structure was then charged to 4.2 V by a current of 0.1 C, and then discharged to 2.5 V by a current of 0.1 C. The charge/discharge cycle was repeated three times to finish the formation process, thereby completing the lithium battery.

The battery had a discharge capacity of 185.37 mAh/g after one charge/discharge (0.1C/0.1C) cycle. The further cycle test was performed as follows: the battery was charged to 4.2 V by a current of 0.5 C, and then discharged to 2.5 V by a current of 0.5 C to complete one cycle. The battery had a discharge capacity of 156.185 mAh/g (defined as the reversible capacity of 100%) after one charge/discharge (0.5 C/0.5 C) cycle. The battery had a discharge capacity of 138.23 mAh/g (reversible capacity of 88.51%) after 100 charge/discharge (0.5 C/0.5 C) cycles. The battery had a discharge capacity of 114.65 mAh/g (reversible capacity of 73.4%) after 300 charge/discharge (0.5 C/0.5 C) cycles. The battery had a discharge capacity of 110.28 mAh/g (reversible capacity of 70.61%) after 500 charge/discharge (0.5 C/0.5 C) cycles.

### Example 2

The organic-inorganic composite coating material in Example 1 was coated onto the positive electrode plate, and then dried to form an organic-inorganic composite film on the surface of the positive electrode plate. The positive electrode plate (containing the organic-inorganic composite film on its surface) and the silicon negative electrode plate were each cut to appropriate size, and the separator was disposed between the positive electrode plate and the silicon negative electrode plate. The organic-inorganic composite film was disposed between the positive electrode plate and the separator. The electrolyte was injected into the space between the positive electrode plate and the silicon negative electrode plate, and the separator was disposed in the electrolyte. The above structure was left to stand for 1 day, and the electrolyte diffused and soaked the positive electrode plate and the negative electrode plate. The above structure was then charged to 4.2 V by a current of 0.1 C, and then discharged to 2.5 V by a current of 0.1 C. The charge/discharge cycle was repeated three times to finish the formation process, thereby completing the lithium battery.

The battery had a discharge capacity of 183.60 mAh/g after one charge/discharge (0.1C/0.1C) cycle. The further cycle test was performed as follows: the battery was charged to 4.2 V by a current of 0.5 C, and then discharged to 2.5 V by a current of 0.5 C to complete one cycle. The battery had a reversible capacity of 90.4% after 100 charge/discharge (0.5 C/0.5 C) cycles. The battery had a reversible capacity of 81.41% after 300 charge/discharge (0.5 C/0.5 C) cycles. The battery had a reversible capacity of 74.66% after 500 charge/discharge (0.5 C/0.5 C) cycles.

### Example 3

The organic-inorganic composite coating material in Example 1 was coated onto the separator, and then dried to form an organic-inorganic composite film on the surface of the separator. A lithium iron phosphate positive electrode plate and a graphite negative electrode plate were each cut to appropriate size, and the separator (containing the organic-inorganic composite film on its surface) was disposed between the positive electrode plate and the negative electrode plate. The organic-inorganic composite film was disposed between the negative electrode plate and the separator. The electrolyte was injected into the space between the positive electrode plate and the negative electrode plate, and the separator was disposed in the electrolyte. The above structure was left to stand for 1 day, and the electrolyte diffused and soaked the positive electrode plate and the negative electrode plate. The above structure was then charged to 3.65 V by a current of 0.1 C, and then discharged to 2.5 V by a current of 0.1 C. The charge/discharge cycle was repeated three times to finish the formation process, thereby completing the lithium battery.

### Example 4

1.5 g of lignocellulose and 13.5 g of montmorillonite clay (commercially available from Southern Clay, having a diameter of less than 0.5 micrometers) serving as clay were dispersed in 185 g of acetone. 35 g of PVDF powder (Kynar HSV900 commercially available from ARKEM) was added into the dispersion and then stirred to be completely dispersed, thereby obtaining an organic-inorganic composite coating material.

The organic-inorganic composite coating material was coated onto a semipermeable film, and then dried to form an organic-inorganic composite film on the semipermeable film. The semipermeable film (containing the organic-inorganic composite film on its surface) was disposed in a connecting pipe between a left tube and a right tube. The left tube contained a magenta aqueous solution of 500 ppm of Mn²⁺ ions and sodium oxalate, and right tube contained de-ionized water. After 6 hours, the right tube was still clear (no Mn²⁺ ions were detected), and the color of the solution in the left tube was lighter. Obviously, the organic-inorganic composite film could adsorb the Mn²⁺ ions, such that the Mn²⁺ ions in the left tube could not penetrate through the organic-inorganic composite film. Alternatively, the semipermeable film (without the organic-inorganic composite film on its surface) was disposed in a connecting pipe between a left tube and a right tube. The left tube contained a magenta aqueous solution of 500 ppm of Mn²⁺ ions and sodium oxalate, and right tube contained de-ionized water. After 6 hours, the right tube was changed to light magenta (Mn²⁺ ions were detected), and the color of the solution in the left tube was lighter. Obviously, Mn²⁺ ions could penetrate through the semipermeable film.

### Example 5

1.5 g of the lignocellulose modified by chelating agent and 13.5 g of montmorillonite clay (commercially available from Southern Clay, having a diameter of less than 0.5 micrometers) serving as clay were dispersed in 185 g of acetone. 35 g of PVDF powder (Kynar HSV900 commercially available from ARKEM) was added into the dispersion and then stirred to be completely dispersed, thereby obtaining an organic-inorganic composite coating material.

The organic-inorganic composite coating material was coated onto a semipermeable film, and then dried to form an organic-inorganic composite film on the semipermeable film. The semipermeable film (containing the organic-inorganic composite film on its surface) was disposed in a connecting pipe between a left tube and a right tube. The left tube contained a magenta aqueous solution of 500 ppm of Mn²⁺ ions and sodium oxalate, and right tube contained de-ionized water. After 12 hours, the right tube was still clear (no Mn²⁺ ions were detected), and the color of the solution in the left tube was lighter. Obviously, the organic-inorganic composite film could adsorb the Mn²⁺ ions, such that the Mn²⁺ ions in the left tube could not penetrate through the organic-inorganic composite film. Alternatively, the semipermeable film (without the organic-inorganic composite film on its surface) was disposed in a connecting pipe between a left tube and a right tube. The left tube contained a magenta aqueous solution of 500 ppm of Mn²⁺ ions and sodium oxalate, and right tube contained de-ionized water. After 12 hours, the right tube was changed to light magenta (Mn²⁺ ions were detected), and the color of the solution in the left tube was lighter. Obviously, Mn²⁺ ions could penetrate through the semipermeable film.

### Example 6

1.5 g of the lignocellulose modified by chelating agent and 13.5 g of montmorillonite clay (commercially available from Southern Clay, having a diameter of less than 0.5 micrometers) serving as clay were dispersed in 185 g of acetone. 35 g of PVDF powder (Kynar HSV900 commercially available from ARKEM) was added into the dispersion and then stirred to be completely dispersed, thereby obtaining an organic-inorganic composite coating material.

The organic-inorganic composite coating material was coated onto the silicon negative electrode plate, and then dried to form an organic-inorganic composite film on the surface of the silicon negative electrode plate. The positive electrode plate and the silicon negative electrode plate (containing the organic-inorganic composite film on its surface) were each cut to appropriate size, and the separator was disposed between the positive electrode plate and the silicon negative electrode plate. The organic-inorganic composite film was disposed between the silicon negative electrode plate and the separator. The electrolyte was injected into the space between the positive electrode plate and the silicon negative electrode plate, and the separator was disposed in the electrolyte. The above structure was left to stand for 1 day, and the electrolyte diffused and soaked the positive electrode plate and the negative electrode plate. The above structure was then charged to 4.2 V by a current of 0.1 C, and then discharged to 2.5 V by a current of 0.1 C. The charge/discharge cycle was repeated three times to finish the formation process, thereby completing the lithium battery.

The battery had a discharge capacity of 187.3 mAh/g after one charge/discharge (0.1C/0.1C) cycle. The further cycle test was performed as follows: the battery was charged to 4.2 V by a current of 0.5 C, and then discharged to 2.5 V by a current of 0.5 C to complete one cycle. The battery had a discharge capacity of 163.53 mAh/g after one charge/discharge (0.5 C/0.5 C) cycle.

### Example 7

The organic-inorganic composite coating material in Example 6 was coated onto the positive electrode plate, and then dried to form an organic-inorganic composite film on the surface of the positive electrode plate. The positive electrode plate (containing the organic-inorganic composite film on its surface) and the silicon negative electrode plate were each cut to appropriate size, and the separator was disposed between the positive electrode plate and the silicon negative electrode plate. The organic-inorganic composite film was disposed between the positive electrode plate and the separator. The electrolyte was injected into the space between the positive electrode plate and the silicon negative electrode plate, and the separator was disposed in the electrolyte. The above structure was left to stand for 1 day, and the electrolyte diffused and soaked the positive electrode plate and the negative electrode plate. The above structure was then charged to 4.2 V by a current of 0.1 C, and then discharged to 2.5 V by a current of 0.1 C. The charge/discharge cycle was repeated three times to finish the formation process, thereby completing the lithium battery.

The battery had a discharge capacity of 184.02 mAh/g after one charge/discharge (0.1C/0.1C) cycle. The further cycle test was performed as follows: the battery was charged to 4.2 V by a current of 0.5 C, and then discharged to 2.5 V by a current of 0.5 C to complete one cycle. The battery had a reversible capacity of 99.98% after 100 charge/discharge (0.5 C/0.5 C) cycles. The battery had a reversible capacity of 93.26% after 300 charge/discharge (0.5 C/0.5 C) cycles. The battery had a reversible capacity of 88.31% after 500 charge/discharge (0.5 C/0.5 C) cycles.

### Example 8

The organic-inorganic composite coating material in Example 6 was coated onto the separator, and then dried to form an organic-inorganic composite film on the surface of the separator. The lithium iron phosphate positive electrode plate and the graphite negative electrode plate were each cut to appropriate size, and the separator (containing the organic-inorganic composite film on its surface) was disposed between the positive electrode plate and the negative electrode plate. The organic-inorganic composite film was disposed between the negative electrode plate and the separator. The electrolyte was injected into the space between the positive electrode plate and the negative electrode plate, and the separator was disposed in the electrolyte. The above structure was left to stand for 1 day, and the electrolyte diffused and soaked the positive electrode plate and the negative electrode plate. The above structure was then charged to 3.65 V by a current of 0.1 C, and then discharged to 2.5 V by a current of 0.1 C. The charge/discharge cycle was repeated three times to finish the formation process, thereby completing the lithium battery.

The battery had a charge capacity of 120.8 mAh/g and a discharge capacity of 116.1 mAh/g after one charge/discharge (0.1C/0.1C) cycle. The battery had an irreversible capacity of 3.9% in first charge/discharge cycle, and the battery had an impedance of 260 mohm.

### Example 9

1.5 g of lignocellulose, 13.5 g of montmorillonite clay (commercially available from Southern Clay, having a diameter of less than 0.5 micrometers) serving as clay, and 1.5 g of aluminum oxide powder were dispersed in 185 g of acetone. 35 g of PVDF powder (Kynar HSV900 commercially available from ARKEM) was added into the dispersion and then stirred to be completely dispersed, thereby obtaining an organic-inorganic composite coating material.

The organic-inorganic composite coating material was coated onto the silicon negative electrode plate, and then dried to form an organic-inorganic composite film on the surface of the silicon negative electrode plate. The positive electrode plate and the silicon negative electrode plate (containing the organic-inorganic composite film on its surface) were each cut to appropriate size, and the separator was disposed between the positive electrode plate and the silicon negative electrode plate. The organic-inorganic composite film was disposed between the silicon negative electrode plate and the separator. The electrolyte was injected into the space between the positive electrode plate and the silicon negative electrode plate, and the separator was disposed in the electrolyte. The above structure was left to stand for 1 day, and the electrolyte diffused and soaked the positive electrode plate and the negative electrode plate. The above structure was then charged to 4.2 V by a current of 0.1 C, and then discharged to 2.5 V by a current of 0.1 C. The charge/discharge cycle was repeated three times to finish the formation process, thereby completing the lithium battery.

The battery had a discharge capacity of 188.6 mAh/g after one charge/discharge (0.1C/0.1C) cycle. The further cycle test was performed as follows: the battery was charged to 4.2 V by a current of 0.5 C, and then discharged to 2.5 V by a current of 0.5 C to complete one cycle. The battery had a discharge capacity of 152.16 mAh/g (defined as the reversible capacity of 100%) after one charge/discharge (0.5 C/0.5 C) cycle. The battery had a discharge capacity of 143.4 mAh/g (reversible capacity of 94.25%) after 100 charge/discharge (0.5 C/0.5 C) cycles. The battery had a discharge capacity of 121.65 mAh/g (reversible capacity of 79.95%) after 300 charge/discharge (0.5 C/0.5 C) cycles. The battery had a discharge capacity of 114.61 mAh/g (reversible capacity of 75.32%) after 500 charge/discharge (0.5 C/0.5 C) cycles.

### Comparative Example 2

The positive electrode plate and the silicon negative electrode plate were each cut to appropriate size, and the separator was disposed between the positive electrode plate and the silicon negative electrode plate. The electrolyte was injected into the space between the positive electrode plate and the silicon negative electrode plate, and the separator was disposed in the electrolyte. The above structure was left to stand for 1 day, and the electrolyte diffused and soaked the positive electrode plate and the negative electrode plate. The above structure was then charged to 4.2 V by a current of 0.1 C, and then discharged to 2.5 V by a current of 0.1 C. The charge/discharge cycle was repeated three times to finish the formation process, thereby completing the lithium battery.

The battery had a discharge capacity of 183.8 mAh/g after one charge/discharge (0.1C/0.1C) cycle. The further cycle test was performed as follows: the battery was charged to 4.2 V by a current of 0.5 C, and then discharged to 2.5 V by a current of 0.5 C to complete one cycle. The battery had a discharge capacity of 149 mAh/g (defined as the reversible capacity of 100%) after one charge/discharge (0.5 C/0.5 C) cycle. The battery had a discharge capacity of 118 mAh/g (reversible capacity of 79.6%) after 100 charge/discharge (0.5 C/0.5 C) cycles. The battery had a discharge capacity of 91.5 mAh/g (reversible capacity of 61.3%) after 300 charge/discharge (0.5 C/0.5 C) cycles. The battery had a discharge capacity of 68.7 mAh/g (reversible capacity of 46%) after 500 charge/discharge (0.5 C/0.5 C) cycles.

### Comparative Example 3

The lithium iron phosphate positive electrode plate and the graphite negative electrode plate were each cut to appropriate size, and the separator was disposed between the positive electrode plate and the negative electrode plate. The electrolyte was injected into the space between the positive electrode plate and the negative electrode plate, and the separator was disposed in the electrolyte. The above structure was left to stand for 1 day, and the electrolyte diffused and soaked the positive electrode plate and the negative electrode plate. The above structure was then charged to 3.65 V by a current of 0.1 C, and then discharged to 2.5 V by a current of 0.1 C. The charge/discharge cycle was repeated three times to finish the formation process, thereby completing the lithium battery.

The battery had a charge capacity of 118.4 mAh/g and a discharge capacity of 111.3 mAh/g after one charge/discharge (0.1C/0.1C) cycle. The battery had an irreversible capacity of 6% in the first charge/discharge cycle, and the battery had an impedance of 280 mohm.

### Comparative Example 4

15 g of montmorillonite clay (commercially available from Southern Clay, having a diameter of less than 0.5 micrometers) serving as clay was dispersed in 185 g of acetone. 35 g of PVDF powder (Kynar HSV900 commercially available from ARKEM) was added into the dispersion and then stirred to be completely dispersed, thereby obtaining an organic-inorganic composite coating material.

The organic-inorganic composite coating material was coated onto the silicon negative electrode plate, and then dried to form an organic-inorganic composite film on the surface of the silicon negative electrode plate. The positive electrode plate and the silicon negative electrode plate (containing the organic-inorganic composite film on its surface) were each cut to appropriate size, and the separator was disposed between the positive electrode plate and the silicon negative electrode plate. The organic-inorganic composite film was disposed between the silicon negative electrode plate and the separator. The electrolyte was injected into the space between the positive electrode plate and the silicon negative electrode plate, and the separator was disposed in the electrolyte. The above structure was left to stand for 1 day, and the electrolyte diffused and soaked the positive electrode plate and the negative electrode plate. The above structure was then charged to 4.2 V by a current of 0.1 C, and then discharged to 2.5 V by a current of 0.1 C. The charge/discharge cycle was repeated three times to finish the formation process, thereby completing the lithium battery.

The battery had a discharge capacity of 184.2 mAh/g after one charge/discharge (0.1C/0.1C) cycle. The further cycle test was performed as follows: the battery was charged to 4.2 V by a current of 0.5 C, and then discharged to 2.5 V by a current of 0.5 C to complete one cycle. The battery had a discharge capacity of 142.4 mAh/g (defined as the reversible capacity of 100%) after one charge/discharge (0.5 C/0.5 C) cycle. The battery had a discharge capacity of 116.7 mAh/g (reversible capacity of 81.93%) after 100 charge/discharge (0.5 C/0.5 C) cycles. The battery had a discharge capacity of 92.95 mAh/g (reversible capacity of 65.3%) after 300 charge/discharge (0.5 C/0.5 C) cycles. The battery had a discharge capacity of 73.2 mAh/g (reversible capacity of 51.43%) after 500 charge/discharge (0.5 C/0.5 C) cycles.

### Comparative Example 5

40 g of montmorillonite clay (commercially available from Southern Clay, having a diameter of less than 0.5 micrometers) serving as clay was dispersed in 160 g of acetone. 10 g of PVDF powder (Kynar HSV900 commercially available from ARKEM) was added into the dispersion and then stirred to be completely dispersed, thereby obtaining an organic-inorganic composite coating material.

The organic-inorganic composite coating material was coated onto the silicon negative electrode plate, and then dried to form an organic-inorganic composite film on the surface of the silicon negative electrode plate. The positive electrode plate and the silicon negative electrode plate (containing the organic-inorganic composite film on its surface) were each cut to appropriate size, and the separator was disposed between the positive electrode plate and the silicon negative electrode plate. The organic-inorganic composite film was disposed between the silicon negative electrode plate and the separator. The electrolyte was injected into the space between the positive electrode plate and the silicon negative electrode plate, and the separator was disposed in the electrolyte. The above structure was left to stand for 1 day, and the electrolyte diffused and soaked the positive electrode plate and the negative electrode plate. The above structure was then charged to 4.2 V by a current of 0.1 C, and then discharged to 2.5 V by a current of 0.1 C. The charge/discharge cycle was repeated three times to finish the formation process, thereby completing the lithium battery.

The battery had a discharge capacity of 180 mAh/g after one charge/discharge (0.1C/0.1C) cycle. The further cycle test was performed as follows: the battery was charged to 4.2 V by a current of 0.5 C, and then discharged to 2.5 V by a current of 0.5 C to complete one cycle. The battery had a discharge capacity of 99.5 mAh/g (defined as the reversible capacity of 100%) after one charge/discharge (0.5 C/0.5 C) cycle. The battery had a discharge capacity of 88.5 mAh/g (reversible capacity of 94.25%) after 100 charge/discharge (0.5 C/0.5 C) cycles.
The battery had a discharge capacity of 79.8 mAh/g (reversible capacity of 80.1%) after 300 charge/discharge (0.5 C/0.5 C) cycles. The battery had a discharge capacity of 84.6 mAh/g (reversible capacity of 85%) after 500 charge/discharge (0.5 C/0.5 C) cycles.

It will be apparent to those skilled in the art that various modifications and variations can be made to the disclosed methods and materials. It is intended that the specification and examples be considered as exemplary only, with the true scope of the disclosure being indicated by the following claims and their equivalents.

## Claims

1. An organic-inorganic composite film, comprising:
100 parts by weight of clay;
3 to 35 parts by weight of lignocellulose; and
25 to 270 parts by weight of a first binder.

2. The organic-inorganic composite film as claimed in claim 1, wherein the clay comprises montmorillonite clay, vermiculite clay, or a combination thereof.

3. The organic-inorganic composite film as claimed in claim 1, wherein the clay has a diameter of less than or equal to 1 micrometer.

4. The organic-inorganic composite film as claimed in claim 1, wherein the first binder comprises polyacrylic acid, polyacrylonitrile, polyethylene carbonate, polyacrylamide, polyethylene glycol, polysiloxane, polyamide, polyvinylidene fluoride, vinylidene fluoride-hexafluoro propylene copolymer, polyvinylpyrrolidone, or a combination thereof.

5. The organic-inorganic composite film as claimed in claim 1, wherein the lignocellulose is modified by a chelating agent, and the lignocellulose and the chelating agent have a weight ratio of 100:0.1 to 100:20.

6. The organic-inorganic composite film as claimed in claim 5, wherein the chelating agent comprises N,N-bis(5-pyridoxalphosphate)-ethylene diamine-N,N'- diacetic acid, N,N'-bis(3-hydroxy-2-methyl-5-phosphonylmethyl)-4-pyridylmethyl) ethylenediamine-N,N'-diacetic acid (DPDP), diethylenetriaminepentaacetic acid (DTPA), cyclohexanediaminetetraacetic acid (DCTA), N,N,N',N'-tetrakis(2-hydroxy propyl)ethylenediamine (EDTP), 1,4,7,10-tetraazacyclododecane-1,4,7,10-tetraacetic acid (DOTA), ethylenediamine tetraacetic acid (EDTA), 1-oxa-4,7,10-triaza cyclododecanetriacetic acid (DOXA), 1,4,7,10-tetraazacyclododecane-1,4,7-triacetic acid trisodium salt (DO3A), or a combination thereof.

7. The organic-inorganic composite film as claimed in claim 1, further comprising 0.1 to 15 parts by weight of oxide nanopowder.

8. The organic-inorganic composite film as claimed in claim 7, wherein the oxide nanopowder comprises aluminum oxide, silicon oxide, boehmite, titanium oxide, magnesium oxide, or a combination thereof.

9. The organic-inorganic composite film as claimed in claim 1, wherein the oxide nanopowder has a diameter of 1 nm to 200 nm.

10. The organic-inorganic composite film as claimed in claim 1, wherein the organic-inorganic composite film has a thickness of 0.1 micrometers to 10 micrometers.

11. A lithium battery, comprising:
a positive electrode plate;
a negative electrode plate;
an electrolyte disposed between the positive electrode plate and the negative electrode plate;
a separator disposed in the electrolyte; and
the organic-inorganic composite film as claimed in claim 1 disposed on the surface of the positive electrode plate, the surface of the negative electrode plate, the surface of the separator, or a combination thereof.
